# EUROPÄISCHE PATENTSCHRIFT

(11) **EP 2 522 707 B1**
(45) Veröffentlichungstag und Bekanntmachung des Hinweises auf die Patenterteilung: **12.10.2016**
(21) Anmeldenummer: 12003717.1
(22) Anmeldetag: 10.05.2012
(51) Int. Cl.: F23G 5/027, C10J 3/30, C10J 3/02, C10J 3/42, C10J 3/36, F23G 5/28

(54) **VORRICHTUNG ZUR ERZEUGUNG EINES BRENNBAREN GASGEMISCHES**
DEVICE FOR CREATING A FLAMMABLE GAS MIXTURE
DISPOSITIF DE GÉNÉRATION D'UN MÉLANGE DE GAZ COMBUSTIBLE

(30) Priorität: 12.05.2011 DE 102011101370
(43) Veröffentlichungstag der Anmeldung: 14.11.2012
(73) Patentinhaber: Joos, Bernd, 88285 Bodnegg (DE)
(72) Erfinder: Joos, Bernd, 88285 Bodnegg (DE)
(74) Vertreter: Riebling, Peter

(56) Entgegenhaltungen:
- WO-A2-2010/022741
- CA-A1- 2 188 736
- DE-A1- 19 830 069
- DE-C- 906 602
- DE-U1-202008 006 737

## Beschreibung

Die Erfindung betrifft eine Vorrichtung zur Erzeugung eines brennbaren Gasgemisches aus einem kohlenstoffhaltigen Ausgangsstoff nach dem Oberbegriff des Anspruchs 1.

### Stand der Technik

Aus der europäischen Patentschrift EP 1 436 364 B1 des Anmelders ist bereits eine Vorrichtung zur Erzeugung eines brennbaren Gasgemisches, insbesondere von Holzgas, vorzugsweise für einen Verbrennungsmotor bekannt, wobei durch die Oxidation und anschließende Reduktion im Reaktor ein nahezu teerfreies Holzgas generierbar ist. Hierfür wird der Reaktor seitlich über einen Zwischenspeicher mit Holzhackschnitzel beschickt und der Reaktor ist mit einem Füllstandsensor zur Erfassung des Füllstandes des Reaktors ausgestattet.

Zwischenzeitlich sind bereits mehrere Dutzend HolzvergaserKWK-Anlagen im Einsatz, die mit einer derartigen Vorrichtung arbeiten, die in Fachkreisen bereits als sogenannter "JoosVergaser" bezeichnet wird. Vor allem bei diesen relativ kleinen KWK-Anlagen stellt die Wirtschaftlichkeit eine besondere Herausforderung dar. Zwar können die "Joos-Vergaser" vergleichsweise wirtschaftlich günstig hergestellt und betrieben werden, allerdings hat sich gezeigt, dass die bislang anfallende nicht vollständig mineralisierte Asche bzw. deren Entsorgungskosten hierbei einen relevanten Faktor darstellen.

Viele dieser Anlagen werden derart betrieben, dass Asche als Abfall bzw. Reststoff aus dem Reaktor mit dem brennbaren Gasgemisch bzw. Holzgas ausgetragen wird, das vor der Zuführung zu einem Verbrennungsmotor eine Nachbehandlung durchläuft. Vielfach wird hierbei ein Staubfilter oder dergleichen verwendet, der das Holzgas von der Asche etc. reinigt, womit dem BHKW ein störungsfreier Betrieb ermöglicht und gleichzeitig die anfallende Asche automatisiert ausgetragen wird.

Diese Asche wird durch den Kohlenstoffanteil von ca. 70% auch als schwarze Asche oder Kohlestaub benannt. Die Konsistenz, Menge und Kohlenstoffanteil dieser Asche können je nach Verfahren der Holzvergasung variieren. Beim Joos-Vergaser liegt diese als pulvrige Substanz vor, deren mehrheitliche Partikelgröße im Bereich von einem Mikrometer bis einem Millimeter liegt. Diese Substanz neigt zu starker Staubildung. Weitere Bestandteile sind Polyzyklische Aromatische Kohlenwasserstoffe (PAK), die durch auskondensieren von Teeren im brennbaren Gasgemisch vom Kohlestaub aufgenommen werden. Die Menge des erzeugten Kohlestaubs beträgt bei einer Anlage von 30KW elektrischer Leistung ca. 70-120 Liter pro Tag. Eine Deponierung eines derartigen Materials ist gesetzlich nicht erlaubt, somit kommt nur eine kostenintensive Entsorgung in Frage. Dies ist für die Wirtschaftlichkeit der gesamten Anlage von Nachteil.

Weitere Nachteile sind hierbei die Problematik des Transports, welcher sich durch die starke Staubbildung der Substanz einstellt und dem Verlust an Energie in Form von Kohlenstoff der Substanz selbst. Die DE202008006737U1 und die CA2188736A1 zeigen lediglich Reaktoren ohne Nachbehandlung des anfallenden Reststoffes.

### Aufgabe und Vorteile der Erfindung

Aufgabe der Erfindung ist es demgegenüber, eine Vorrichtung zur Erzeugung eines brennbaren Gasgemisches aus einem kohlenstoffhaltigen Ausgangsstoff, insbesondere aus verschiedenem Holz, vorzuschlagen, die gegenüber dem Stand der Technik wirtschaftlicher zu betrieben ist.

Diese Aufgabe wird, ausgehend von einer Vorrichtung der einleitend genannten Art, vor allem durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, dass die Nachbehandlungseinheit einen zumindest eine Oxidationszone aufweisenden Oxidationsreaktor zur Oxidation des Reststoffes umfasst und dass zwischen einer mit mindestens einer Schließeinheit im Wesentlichen gasdicht verschließbaren Eintragsöffnung der Nachbehandlungseinheit und dem Oxidationsreaktion wenigstens eine Vorratseinheit zum Bevorraten des Reststoffes angeordnet ist.

Mit Hilfe dieser Maßnahme wird erreicht, dass eine möglichst vollständige Mineralisierung des Reststoffs, d.h. im Wesentlichen die Erzeugung einer "weißen Asche" ermöglicht wird. Durch die weitestgehend gasdichte Schließeinheit zum weitestgehend gasdichten Verschließen der Eintragsöffnung der Nachbehandlungseinheit kann eine kontrollierte Oxidation im Bereich des Oxidationsreaktors der Nachbehandlungseinheit gewährleistet werden. Dies verhindert unbeabsichtigte bzw. nachteilige Reaktionsprodukte, die gegebenenfalls zu einer teueren Entsorgung der Asche bzw. Abfallstoffe der Nachbehandlungseinheit führen können.

Durch die vorteilhafte Vorratseinheit, die in Strömungsrichtung des Reststoffes aus dem Reaktor hinter der möglichst gasdicht abschließbaren Eintragsöffnung angeordnet ist, kann eine Entkopplung der Füllung der Nachbehandlungseinheit mit der Zuführung des Reststoffes zum Oxidationsreaktor realisiert werden. Vorzugsweise wird eine diskontinuierliche Befüllung der Nachbehandlungseinheit bei vergleichsweise kurzzeitigem Öffnen der Eintragsöffnung und einer weitgehend kontinuierlichen Zuführung des Reststoffs zur Oxidation bzw. zum Oxidationsreaktor vorgesehen. Es hat sich gezeigt, dass eine derartige vorteilhafte kontinuierliche Befüllung des Reststoffes zur Oxidation im Oxidationsreaktor für die vollständige Mineralisierung des Reststoffes bzw. der Asche von großem Vorteil ist. Hiermit wird eine vergleichsweise kostengünstige Entsorgung der durch die erfindungsgemäße Nachbehandlung generierten Asche bzw. Abfallstoffe ermöglicht. Demzufolge wird die gesamte Anlage bzw. der Betrieb der Vorrichtung zur Erzeugung eines brennbaren Gasgemisches aus einem kohlenstoffhaltigen Ausgangsstoff gemäß der Erfindung im Vergleich zum Stand der Technik deutlich verbessert.

Es hat sich in zahlreichen aufwendigen Versuchen gezeigt, dass eine nahezu gasdichte Schließeinheit sowie eine Vorratseinheit von entscheidendem Vorteil bzw. unbedingt notwendig sind, um ein kontrolliertes bzw. störungsfreies sowie ggf. kontinuierliches Einbringen des Reststoffes bzw. des feinen Kohlestaubs zu gewährleisten. Andernfalls würde es zu einem nachteiligen Aufwirbeln des Reststoffes bzw. Kohlestaubs oder der Glut aus/in der Oxidationszone kommen, was dann durch Luft-Strömungen/-Verwirbelungen dazu führen würde, dass Reststoff bzw. feiner Kohlestaub die Nachbehandlungseinheit bzw. den Kohlestaubofen durch die Eintragsöffnung wieder verlässt bzw. ausgetragen wird.

Grundsätzlich kann die Nachbehandlungseinheit neben dem erfindungsgemäßen Oxidationsreaktor weitere Verfahrensschritte oder Komponenten aufweisen, wie z.B. eine oder mehrere Filter-oder Reinigungsstufen, insb. Tuchfilter, Gaswäscher, Ölbad etc., und/oder Wärmetauscher bzw. Kühler und/oder Katalysatoren oder dergleichen.

Vorzugsweise ist die Vorratseinheit in horizontaler Richtung seitlich am Oxidationsreaktor angeordnet bzw. die Zuführung des Reststoffes zum Oxidationsreaktor aus dem Vorratsbehälter bzw. Vorratseinheit erfolgt in horizontaler Richtung seitlich zum Oxidationsreaktor. Es hat sich gezeigt, dass die Oxidation im Oxidationsreaktor durch eine derartige Befüllung von Vorteil ist.

Vorzugsweise weist die Nachbehandlungseinheit wenigstens eine Fördervorrichtung zum Befördern des Reststoffes von der Vorratseinheit in den Oxidationsreaktor auf. Hierdurch kann eine kontrollierte und vorzugsweise kontinuierliche Befüllung des Oxidationsreaktors mit Reststoff verwirklicht werden. Dies ist für die Oxidation des Reststoffes von Nutzen.

Vorteilhafterweise weist die Fördervorrichtung wenigstens einen Antriebsmotor zum Antreiben mindestens eines Förderelementes auf. Beispielsweise kann ein als Antriebsmotor ausgebildeter Elektromotor in vorteilhafter Weise gesteuert bzw. betrieben werden, so dass die Zufuhr bzw. Förderung des Reststoffes zum Oxidationsreaktor möglichst optimal bzw. kontrolliert und vorzugsweise kontinuierlich realisierbar ist. Zudem kann der Antriebsmotor auch dafür verwendet werden, dass ein Festsitzen bzw. Verklumpen oder eine Brückenbildung oder dergleichen des Reststoffes bzw. des feinen Kohlestaubes wirkungsvoll verhindert oder beseitigt wird.

Alternativ oder in Kombination hierzu kann die Zuführung des Reststoffs zum Oxidationsreaktor mittels der Schwerkraft, beispielsweise mittels einer Schräge bzw. Rutsche realisiert werden. D.h. im Sinn der Erfindung ist bei dieser Ausführungsform die Fördervorrichtung als Schräge bzw. Rutsche für den Reststoff und/oder oxidierten Abfallstoff ausgebildet. So ist beispielsweise bei einer ersten vorteilhaften Variante der Erfindung eine Förderrichtung des Reststoffes zwischen der Vorratseinheit und dem Oxidationsreaktor als wenigstens teilweise in vertikaler Richtung absteigende Förderrichtung des Reststoffes ausgebildet.

Alternativ oder in Kombination hierzu ist bei einer zweiten vorteilhaften Variante der Erfindung eine Förderrichtung des Reststoffes zwischen dem Oxidationsreaktor und einer Austragsöffnung zum Austragen eines Abfallstoffes der Nachbehandlungseinheit als wenigstens teilweise in vertikaler Richtung absteigende Förderrichtung des Reststoffes ausgebildet.

Diese beiden Varianten ermöglichen ein vorteilhaftes selbsttätiges bzw. durch Schwerkraft angetriebenes Fördern des Reststoffes bzw. des oxidierten Abfallstoffes durch wenigstens einen Teil bzw. Abschnitt der Nachbehandlungseinheit. Dies ist vor allem im Bereich der heißen bzw. glühenden Oxidationszone der Nachbehandlungseinheit von großem Vorteil. Hiermit wird ermöglicht, dass nur sehr wenige oder sogar keine bewegten Teile/Komponenten im Bereich der Oxidationszone vorgesehen werden müssen. Dies erhöht die Betriebssicherheit, da bewegte Teile im glühenden bzw. sehr heißen Bereich der Oxidation großen thermischen Belastungen ausgesetzt sein können, was durchaus auch zu nachteiligen Beeinträchtigungen bzw. Materialverschleiß führen kann.

Zudem werden durch ein mittels Schwerkraft angetriebene Förderung der konstruktive und der wirtschaftliche Aufwand reduziert.

Generell ist eine (elektro-) mechanisch bzw. motorisch angetriebene Fördervorrichtung im Bereich der Vorratseinheit von Vorteil, um ein Verklumpen und/oder eine Brückenbildung des Reststoffs bzw. des feinen Kohlestaubs entgegen zu wirken bzw. aufzulösen. So weist bei einer bevorzugten Weiterbildung der Erfindung die Vorratseinheit eine/die Fördervorrichtung zum Befördern des Reststoffes auf, insbesondere wenigstens eine Förderschnecke, einen Schieber, einen sogenannten Kratzboden oder dergleichen. Der Oxidationsreaktor bzw. in der Oxidationszone und/oder in der Austragungszone/-abschnitt der Nachbehandlungseinheit ist eine vorteilhafte Schwerkraft angetriebene Beförderung bzw. Fördereinheit von Vorteil.

Auch kann die Fördervorrichtung eine in wenigstens teilweise vertikaler Richtung aufsteigende Fördererrichtung des Reststoffes aufweisen. Das bedeutet, dass der Oxidationsreaktor vorzugsweise seitlich mittels einer aufsteigenden Fördervorrichtung befüllt wird. Hierdurch wird erreicht, dass oberhalb der Oxidationszone des Oxidationsreaktors ein Raum entsteht, bei dem sich heiße, aufsteigende Gase bzw. Gasgemische sowie Dämpfe sammeln und vorzugsweise kondensieren können, ohne dass diese entgegen der aufsteigenden Förderrichtung des Reststoffes zum Reaktor in Richtung der Vorratseinheit oder der Schließeinheit der Nachbehandlungseinheit strömen bzw. diffundieren. Dies führt dazu, dass bewegliche Komponenten der Schließeinheit oder der Fördervorrichtung nicht durch entsprechende chemische Substanzen, die im Oxidationsreaktor als Zwischenprodukte gebildet werden können, beeinträchtigt werden können. Entsprechende Substanzen verbleiben gemäß dieser vorteilhaften Variante gemäß der Erfindung im Bereich des Oxidationsreaktors und werden gegebenenfalls durch nachkommende Reststoffe aus der Vorratseinheit zumindest teilweise wieder der Oxidationszone des Oxidationsreaktors zugeführt und entsprechend zersetzt bzw. oxidiert.

Vorteilhafterweise weist der Oxidationsreaktor bzw. die Oxidationszone wenigstens ein Leitelement zum Leiten und Bewegen bzw. Durchwühlen des Reststoffes und/oder des Abfallstoffes und/oder des Oxidationsmittels bzw. der Luft auf. Hiermit kann erreicht werden, dass der Reststoff im Oxidationsreaktor bzw. im Bereich der Oxidationszone möglichst nicht verklumpt, verkrustet oder ähnliches. Auch kann erreicht werden, dass die Oxidation nicht beeinträchtigt wird, d.h. insbesondere dass die Oxidation möglichst vollständig und z.B. großflächig oder nicht nur oberflächlich abläuft, sondern durch das Bewegen bzw. Durchwühlen bzw. Umwühlen der gesamte Reststoff mit Luft bzw. Oxidationsmittel in vorteilhaften Kontakt gebracht wird, insbesondere auch bei einer Schwerkraft angetriebenen Förderung im Bereich der Oxidationszone.

Beispielsweise kann/können das/die Leitelemente als statische bzw. fest fixierte Elemente und/oder am Boden des Oxidationsreaktors angeordnete Rampe, Querstrebe etc. und/oder als seitlich und/oder am Deckenbereich des Oxidationsreaktors angeordnete Paddel, Führungselemente, Streben oder Stäbe etc. ausgebildet werden. Hiermit kann ein vorteilhaftes Durchwühlen und in Kontaktbringen mit dem Oxidationsmittel/Luft gewährleistet werden und zudem konstruktiv mit geringem Aufwand realisiert werden. Auch kann die Luftströmung in der Oxidationszone vorteilhaft mit Leitelementen geleitet bzw. umgelenkt/gesteuert werden

Vorteilhafterweise umfasst ein Gehäuse der Nachbehandlungseinheit wenigstens ein zahlreiche Öffnungen aufweisendes Siebelement zum Durchströmen von Luft und/oder Oxidationsmittel. Hiermit wird erreicht, dass die Strömung der Luft bzw. des Oxidationsmittels verbessert und zudem Reststoff, der häufig zu einem erheblichen Teil bzw. vollständig staubförmig ausgebildet ist, nicht oder in sehr geringem Maß aus der Nachbehandlungseinheit ausgetragen wird. Vorzugsweise ist das Siebelement als Filter zum Filtern bzw. Zurückhalten des Reststoffes ausgebildet.

So kann die Strömungsgeschwindigkeit der Luft bzw. des Oxidationsmittels in der Nachbehandlungseinheit im Vergleich mit einer einzigen, relativ großen Öffnung wesentlich vergrößert werden, ohne dass Reststoff ausgetragen wird. Auch führt eine relativ große Strömungsgeschwindigkeit der Luft bzw. des Oxidationsmittels zu einer verbesserten Oxidation bzw. vorteilhaften Mineralisierung und somit zur optimierten Erzeugung einer weißen Asche. Auch trägt eine vergleichsweise große Strömungsgeschwindigkeit der Luft bzw. des Oxidationsmittels maßgeblich zur vorteilhaften Funktion der Nachbehandlungseinheit bzw. des Kohlestaubofens bei, indem sie z.B. durch Funkenflug von bereits glühendem Reststoff bzw. Kohlestaub eine relativ schnelle und möglichst gleichmäßige Ausbreitung der Oxidationszone gewährleistet. Des Weiteren kann (pro Zeiteinheit) durch eine relativ hohe Strömungsgeschwindigkeit mehr Sauerstoff in die Oxidationszone gelangen.

Vorzugsweise ist das Siebelement zwischen dem Oxidationsreaktor sowie der Vorratseinheit angeordnet. So kann das Siebelement z.B. als Gitter, Netz, Gewebe, Stahlseil- oder Draht-Geflecht, Sieb, Lochblech oder dergleichen ausgebildet werden. Hierdurch bildet das Siebelement einen definierten Anfang und/oder Ende des Strömungsweges der Luft bzw. des Oxidationsmittels durch die Nachbehandlungseinheit. Bei einer im Gleichstrom durchströmten Variante der Erfindung ist das Siebelement bei dieser Variante zumindest der Anfang und bei einer im Gegenstrom durchströmten Variante der Erfindung ist das Siebelement zumindest das Ende des Strömungsweges der Luft bzw. des Oxidationsmittels innerhalb der Nachbehandlungseinheit bzw. des Kohlestaubofens gemäß der Erfindung.

Auf der Gegenseite des Strömungsweges der Luft bzw. des Oxidationsmittels kann eine zweite Öffnung bzw, das zweite Ende/Anfang durchaus ebenfalls als zweites Siebelement oder als relativ großflächige Öffnung ausgebildet werden. Es hat sich gezeigt, dass bereits ein Siebelement, als Regelglied bzw. Strömungskontroll-Element ausgebildet, ausreicht, um eine vorteilhafte Strömung bzw. Strömungsgeschwindigkeit innerhalb der Nachbehandlungseinheit zu generieren.

Das zweite Ende bzw. Anfang dieses Strömungsweges kann in vorteilhafter Weise zugleich als Austragsöffnung des oxidierten Reststoffs bzw. des Abfallstoffes ausgebildet werden.

In einer besonderen Weiterbildung der Erfindung ist die Fördervorrichtung als Abstreifer und/oder als Reinigungseinheit zum Abstreifen bzw. Reinigen des Siebelementes ausgebildet. So kann die Fördervorrichtung sich beispielsweise vom Bereich der Vorratseinheit bis mindestens zum Siebelement und/oder bis zur Oxidationszone oder auch darüber hinaus erstrecken, um das Siebelement zugleich zu reinigen bzw. von Material- oder Staubansammlungen oder dergleichen zu befreien bzw. diese abzustreifen. Dies kann in vorteilhafter Weise mittels einer Förderschnecke realisiert werden, wobei der Förderweg als Rohr bzw. runder Förderkanal oder dergleichen ausgebildet werden kann. Das Gehäuse des Förderweges bzw. des Förderkanals umfasst hierbei das Siebelement bzw. in das Gehäuse sind zahlreiche Löcher bzw. Öffnungen eingebracht bzw. gebohrt, gelasert, gestanzt etc.

Vorteilhafterweise sind wenigstens teilweise die Fördervorrichtung bzw. die Förderspirale und/oder Förderkanal und/oder das/die Leitelemente und/oder das Siebelement bzw. das Gitter, Sieb, Netz oder dergleichen aus einem hitzebeständigen Material bzw. aus Stahl, insbesondere Edelstahl, oder Keramik oder Mineralsfaser oder aus vorteilhaften Verbundstoffen gefertigt.

Gegebenenfalls weist der Oxidationsreaktor wenigstens eine Pyrolyseeinheit zum chemischen Umformen des Reststoffes auf. Es hat sich gezeigt, dass besondere im Reststoff zum Teil vorhandene, chemisch komplexere Verbindungen in vorteilhafter Weise durch eine Pyrolyse zumindest teilweise chemisch umgeformt bzw. zersetzt werden können. So können mit dieser Maßnahme auch ehemals komplexere chemische Verbindungen des Reststoffes in der Nachbehandlungseinheit und insbesondere anschließend in der Oxidationszone des Oxidationsreaktors weitestgehend mineralisiert bzw. zersetzt werden.

In einer besonderen Variante der Erfindung ist wenigstens ein Füllstandssensor zur Messung des Füllungsgrades bzw. des Füllstandes der Vorratseinheit und/oder des Oxidationsreaktors vorgesehen. Vorzugsweise ist dieser Füllstandssensor als mechanisch abtastender Füllstandssensor ausgebildet. Es hat sich gezeigt, dass die Steuerung bzw. Regelung der Nachbehandlungseinheit und/oder des Oxidationsreaktors mit einem derartigen Füllstandssensor in vorteilhafter Weise realisierbar ist. Hierbei zeichnet sich gerade ein mechanischer abtastender Füllstandssensor dadurch aus, dass dieser eine hohe Betriebssicherheit aufweist.

Grundsätzlich kann gegenüber dem Stand der Technik die erfindungsgemäße Vorrichtung die Wirtschaftlichkeit einer Vorrichtung zur Erzeugung eines brennbaren Gasgemisches aus kohlenstoffhaltigen Ausgangsstoffen, insbesondere Holz, deutlich verbessern. Möglich wird dies unter anderem durch eine vorteilhafte Oxidation des anfallenden Reststoffes bzw. Kohlestaubs außerhalb des Vergasers bzw. des Reaktors der Holzvergaseranlage.

Nach der Oxidation des Kohlestaubs in der Nachbehandlungseinheit, d.h. im sogenannten "Kohlestaubofen", liegt ein mineralischer Abfallstoff bzw. Abfallprodukt im Wesentlichen ohne schädliche bzw. giftige oder umweltrelevante Schadstoffe, wie z.B. PAK oder dergleichen, und/oder in vorteilhafter Weise mit einem Kohlenstoffanteil unter etwa 5% vor. Dieses Abfallprodukt der Nachbehandlungseinheit gemäß der Erfindung kann auch als sogenannte "weiße Asche" benannt werden. Diese "weiße Asche" besitzt gegenüber dem Kohlestaub, d.h. dem Reststoff des Vergasers, ein deutlich geringeres Volumen, lässt sich durch den geringen Kohlenstoffanteil gegenüber dem Kohlestaub kostengünstig entsorgen und neigt deutlich weniger zur Staubbildung. Des Weiteren wird bei der Oxidation des Kohlestaubs Energie in Form von Wärme frei, die in vorteilhafter Weise mittels der Erfindung genutzt werden kann.

Als Nebenprodukt der erfindungsgemäßen Nachbehandlung bzw. Oxidation entsteht u.a. ein Abgas, das vermehrt Kohlenstoffdioxid enthält. Dieses Abgas ist im Allgemeinen nicht brennbar und ist z.B. dem einer Holzfeuerung ähnlich. So kann dieses Abgas gegebenenfalls über eine einfache Öffnung oder einen Kamin oder dergleichen ins Freie bzw. in die Atmosphäre geleitet werden oder gegebenenfalls der Holzvergasungsvorrichtung bzw. dem Gasmotor zugeführt werden.

In einer vorteilhaften Ausführungsform der Erfindung kann bei der Nachbehandlung bzw. Oxidation des Reststoffes bzw. des Kohlestaubs entstehende Wärme mittels einer Wärmetauschereinheit weiter verwendet werden. Die Wärmetauschereinheit kann insbesondere einen Kühlmantel umfassen, der z.B. durch ein doppelwandiges Rohr ausgebildet ist und/oder der wenigsten teilweise um den Oxidationsreaktor und ggf. darüber hinaus angeordnet ist. Die übertragene Wärme der Wärmetauschereinheit kann einem Fluid vorzugsweise dem Kühlkreislauf der Kraftwärmekopplung zugeführt werden.

Generell kann die Startenergie zum Starten der Oxidation bzw. zum Zünden der Oxidationszone vorzugsweise am Eingang der Luftströmung z.B. mithilfe einer externen Energiequelle wie beispielsweise einer Lötlampe oder dergleichen zugeführt werden. Dieser Vorgang kann mehrere Sekunden oder Minuten in Anspruch nehmen und wird anschließend während der gesamten Betriebsdauer bzw. während dem Ablaufen der Oxidation nicht mehr benötigt, da die Oxidation dann in vorteilhafter Weise selbsttätig ablaufen kann. Nach einer Unterbrechung der Oxidation, z.B. aufgrund einer Unterbrechung der Reststoffzufuhr, muss entsprechend die Oxidation wieder neu gezündet bzw. gestartet werden.

Der oxidierte Reststoff bzw. der Abfallstoff der Nachbehandlungseinheit bzw. des Kohlestaubofens, d.h. die weiße Asche, kann beispielsweise in eine vorteilhafte Speichereinheit gelangen, worin dieser gespeichert wird. Diese Speichereinheit kann automatisch oder manuell z.B. in regelmäßigen oder vorgegebenen Zeitintervallen geleert und/oder aus dem Oxidationsreaktor befüllt werden.

So ist bei einer Variante der Erfindung eine vorteilhafte verschließbare Austragsöffnung der Nachbehandlungseinheit bzw. des Oxidationsreaktors vorgesehen. Durch Öffnen der Austragsöffnung kann dann in vorteilhafter Weise die Speichereinheit vorzugsweise mittels Schwerkraft befüllt werden.

Zur Lösung der erfindungsgemäßen Aufgabe kann eine Vorrichtung gemäß Anspruch 1 derart ausgebildet werden, dass wenigstens eine verstellbare Rostvorrichtung mit einem exzentrisch um eine Drehachse drehbaren Rostelement vorgesehen ist. Es hat sich gezeigt, dass eine derart exzentrisch drehbare Rostvorrichtung des Reaktors und/oder des Oxidationsreaktors im Vergleich zu bisherigen Rostvorrichtungen gemäß dem Stand der Technik von großem Vorteil sind.

Bisherige Rostvorrichtungen sind zum Teil zentrisch um eine Drehachse drehbar ausgebildet bzw. weisen entsprechend zentrisch drehbare Rostelemente auf. Bislang führten jedoch die beispielsweise bei Hackschnitzel durchaus vorkommenden Verunreinigungen wie Steine, Nägel, Schrauben bzw. Metallstücke oder dergleichen dazu, dass bisherige Rostvorrichtungen mit der Zeit verstopften bzw. beeinträchtigt wurden, sodass die Erzeugung des brennbaren Gasgemisches bzw. Holzgases gestört bzw. beeinträchtigt wurde. Es hat sich in ersten Versuchen jedoch gezeigt, dass durch eine exzentrische Drehung eines Rostelementes, insbesondere eines oberen Rostelementes, das vorzugsweise vertikal über einem feststehenden, zweiten Rostelement angeordnet ist, dies wirkungsvoll verhindert wird. Hierbei wird eine Beförderung des im Reaktor und/oder Oxidationsreaktors erzeugten Reststoffes bzw. Staub/Asche und/oder Verunreinigungen nach außen realisiert. Hierdurch wird die Betriebssicherheit weiter erhöht bzw. die Störanfälligkeit des Reaktors bzw. Oxidationsreaktors verringert, was zu einer wirtschaftlich besonders günstigen Betriebsweise führt.

Grundsätzlich ist auch von Vorteil, dass auf dem Rost- bzw. der Rostvorrichtung bzw. etwas von diesem beabstandet bewegbare Räumer oder dergleichen angeordnet sind. Diese führen zu einer vorteilhaften Bewegung des Glutbetts bzw. der Oxidationszone des Reaktors/Oxidationsreaktors.

Beispielsweise bei einem Abwechseln der Rostelemente mit wenigstens je einem feststehenden und einem beweglichen Element, können die feststehenden Rostelemente nicht nur in Drehrichtung, sondern auch in vertikaler Richtung fixiert werden. Es hat sich gezeigt, dass durch diese vorteilhafte Variante vor allem die unteren Rostelemente deutlich weniger Gewichtsbelastung erfahren und sich der Verschleiß stark verringert.

Vorteilhafterweise weist die Zufuhreinheit des Reaktors und/oder die Vorratseinheit der Nachbehandlungseinheit bzw. des Oxidationsreaktors wenigstens eine, mindestens zwei in Bewegungsrichtung des Ausgangsstoffes bzw. des Reststoffes hintereinander angeordnete Verschlusselemente umfassende Eingangsschleuse für den Ausgangsstoff oder den Reststoff auf. Mit einer derartigen, vorteilhaften Eingangsschleuse kann erreicht werden, dass z.B. die Vorrichtung bzw. die Nachbehandlungseinheit und somit der Reaktor bzw. der Oxidationsreaktor durch die Befüllung bzw. Beschickung zu keiner Zeit einen freien Zugang zur Atmosphäre aufweist. Beispielsweise wird immer eines der beiden Verschlusselemente der Eingangsschleuse im gasdicht verschlossenen Zustand belassen, während das andere Verschlusselement gegebenenfalls kurzzeitig geöffnet wird. Vorzugsweise ist das nach außen hin ausgerichtete "äußere" Verschlusselement der Eingangsschleuse nur kurzzeitig für die Beschickung bzw. Befüllung geöffnet und ansonsten weitestgehend gasdicht die Eingangsschleuse verschließend ausgebildet.

Das "innere" Verschlusselement der Eingangsschleuse kann durchaus den größten Teil während des Betriebs geöffnet sein, sodass im gewöhnlichen Betrieb ausschließlich das "äußere" Verschlusselement der Eingangsschleuse die Gasdichtheit der Vorrichtung bzw. der Nachbehandlungseinheit gewährleistet. Lediglich für die Befüllung bzw. Beschickung kann dann das "innere" Verschlusselement der Eingangsschleuse verschlossen werden. Hierbei wird in der Eingangsschleuse der Ausgangsstoff bzw. der Reststoff entsprechend kurzzeitig zwischen gelagert.

Nach dem gasdichten Verschließen des "äußeren" Verschlusselementes kann dann das "innere" Verschlusselement der Eingangsschleuse wieder geöffnet werden, sodass das bevorratete Material der Eingangsschleuse in die Speichervorrichtung oder in die Vorratseinheit befördert wird bzw. vorzugsweise fällt. Das "innere" Verschlusselement der Eingangsschleuse kann dann bis zur nächsten Beschickung bzw. Befüllung der Speichervorrichtung bzw. der Vorratseinheit geöffnet bleiben.

Die Zufuhreinheit des Reaktors und/oder die Vorratseinheit des Oxidationsreaktors und/oder die Eingangsschleuse weisen wenigstens eine Schließdichtung mit einer im Wesentlichen in Bewegungsrichtung des Ausgangsstoffes oder des Reststoffes ausgerichteten Dichtfläche auf. Diese Maßnahme führt bei einer Vorrichtung gemäß Anspruch 1 zu einer Lösung der erfindungsgemäßen Aufgabe. Es hat sich nämlich gezeigt, dass im Dauerbetrieb - gerade bei der Verwendung von Hackschnitzeln als Ausgangsstoff - es von Zeit zu Zeit zu Undichtigkeiten der Eintragsöffnung bzw. der Einfüllöffnung der Speichervorrichtung bzw. der Nachbehandlungseinheit und/oder der Eingangsschleuse kommen kann.

Derartige Undichtigkeiten führen zu einer Beeinträchtigung der chemischen Reaktionen im Reaktor/Oxidationsreaktor. Im Gegensatz zu den bislang üblichen Dichtungen, die quer zur Bewegungsrichtung des Ausgangsstoffes oder des Reststoffes ausgerichtet waren und durch Anlagerung von Verschmutzungen bzw. sonstigen Ablagerungen wie Hackschnitzel-Bruchstücke oder Sägemehl undicht wurden, wird eine derartige Beeinträchtigung an der erfindungsgemäß ausgerichteten Dichtfläche wirkungsvoll verhindert. Hierdurch wird auch im Dauerbetrieb eine gasdichte Betriebsweise der Vorrichtung bzw. der Nachbehandlungseinheit gewährleistet und führt somit zu einer wirtschaftlich günstigen und störungssicheren Betriebsweise.

Vorzugsweise dichtes das Verschlusselement der Schließeinheit bzw. der Eingangsschleuse oder dergleichen an einer Stirnseite bzw. Kante gegen die erfindungsgemäße Dichtungsfläche ab. Hierbei hat es sich als besonders vorteilhaft gezeigt, dass das Verschlusselement in die Dichtung bzw. längs der Dichtfläche einfährt bzw. verschlossen wird.

Beispielsweise kann ein Verschlusselement derart ausgebildet werden, dass dies um eine außerhalb der Verschlussfläche des Verschlusselementes angeordnete Schwenkachse verschwenkt und zum Verschließen der entsprechenden Füllung- bzw. Beschickungsöffnung mit den Stirnseiten der Verschlussfläche bzw. des Verschlusselementes in die Dichtung mit der erfindungsgemäßen Dichtfläche hineinschwenkt bzw. in diese einfährt.

Vorzugsweise ist die Dichtung bzw. Dichtungsfläche gemäß der Erfindung als Hohlzylinder ausgebildet, innerhalb dessen die Verschlussfläche bzw. das Verschlusselement in verschlossenem Zustand angeordnet ist und in vorteilhafter Weise gegen die Dichtung bzw. die Dichtungsfläche drückt. Hierdurch kann eine Ablagerung von Sägemehl bzw. Staub im Bereich der Dichtungsfläche wirkungsvoll verhindert werden bzw. durch das Einfahren bzw. Einschwenken des Verschlusselementes gemäß der Erfindung entfernt bzw. weggedrückt werden. Hierdurch wird die Dichtigkeit auch unter schwierigsten Verhältnissen bei der Verwendung von Hackschnitzeln oder dergleichen dauerhaft gewährleistet.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematische Darstellung einer Vorrichtung gemäß der Erfindung bis zur Gasgemischerzeugung,
- Figur 2: eine schematische Darstellung einer Vorrichtung nach der Gasgemischerzeugung und mit einer ersten Nachbehandlungseinheit gemäß der Erfindung,
- Figur 3: ein schematisches Detail eines exzentrisch drehbaren Rostes einer Vorrichtung gemäß der Erfindung,
- Figur 4: eine schematische Darstellung einer Vorrichtung nach der Gasgemischerzeugung und mit einer zweiten Nachbehandlungseinheit gemäß der Erfindung und
- Figur 5: eine schematische Darstellung einer Vorrichtung nach der Gasgemischerzeugung und mit einer dritten Nachbehandlungseinheit gemäß der Erfindung.

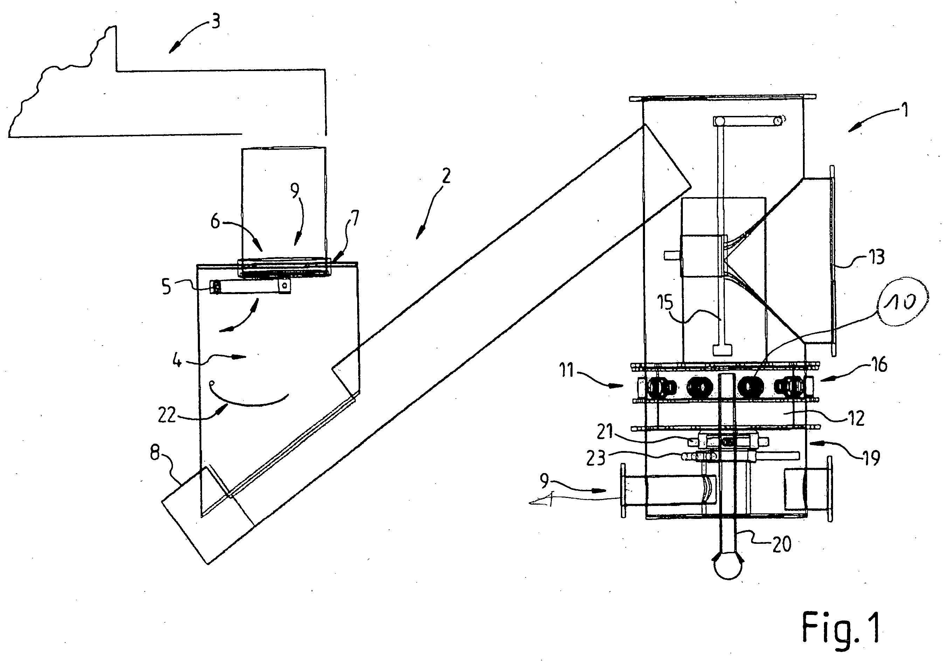

In Figur 1 ist ein Reaktor 1, eine Zufuhreinheit 2 und lediglich ein Ausschnitt eines Vorratssilos 3 dargestellt.

Als Ausgangsstoff sind in nicht näher dargestellter Weise beispielsweise Hackschnitzel aus Abfall- bzw. Restholz im Vorratssilo 3 gespeichert. Das Vorratssilo 3 umfasst ein um ein Vielfaches größeres Speichervolumen als ein Volumen einer Speichervorrichtung 4 der Zufuhreinheit 2. Das vergleichsweise große Volumen des Silos 3 ermöglicht eine Bevorratung von Hackschnitzel für eine relativ große Betriebszeit der Vorrichtung gemäß der Erfindung, wie z.B. ein oder mehrere Wochen bzw. Monate.

Gegebenenfalls wird das Holz im Silo 3 mittels Wärme, insbesondere Abwärme vom Reaktor 1, vorgetrocknet. Das Silo 3 ist gegebenenfalls als oben offenes Silo 3, Lagerplatz mit einer Beschickungsvorrichtung zur Beschickung der Vorrichtung gemäß der Erfindung oder dergleichen ausgebildet. Die Speichervorrichtung 4 weist beispielsweise ein Volumen auf, das ausreicht, den Reaktor 1 ungefähr mehrere Stunden oder ca. einen Tag ohne Öffnen einer nahezu gasdicht verschlossenen, um eine Drehachse 5 drehbare Klappe 6 bzw. ohne Beschickung aus dem Silo 3 zu betreiben. Das gasdichte Verschließen einer Öffnung 9 bzw. der Speichervorrichtung 4 kann alternativ auch mittels eines Schiebers, einer Schleuse oder dergleichen realisiert werden.

Die Hackschnitzel werden z.B. mittels einer Schneckenbeschickung aus dem Silo 3 der Vorrichtung gemäß der Erfindung zugeführt. Zur Beschickung wird die weitgehend gasdicht verschließende Klappe 6 geöffnet. Die Beschickungsphase kann wenige Minuten oder Sekunden dauern, insbesondere bis die Speichervorrichtung 4 teilweise gefüllt ist und die Klappe 6 wieder nahezu gasdicht zu verschließen ist.

Ein Füllstandssensor 22 ermittelt möglicherweise den Füllstand der Speichervorrichtung 4, z.B. einen Drehflügelvollmelder, Ultraschallsensor oder dergleichen. Vorzugsweise ist die Klappe 6 hydraulisch, pneumatisch, mechanisch und/oder elektrisch zu betätigen, wobei eine weitgehend automatisiert ansteuerbare und betätigbare Klappe 6 von Vorteil ist.

Die Klappe 6 dichtet stirnseitig gegen eine Dichtfläche 7, die im Wesentlichen parallel zur Fall- bzw. Einfüllrichtung des Reststoffes ausgerichtet und als Hohlzylinder ausgebildet ist. Durch das Einfahren der Klappe 6 beim Schließvorgang werden gegebenenfalls vorhandene Verunreinigungen wie Staub, Sägemehl oder dergleichen an der Dichtfläche beseitigt, so dass auch dauerhaft ein gasdichter Verschluss der Vorrichtung gemäß der Erfindung bzw. des Zwischenspeichers 4 realisiert wird. Der Verschluss ist somit selbstreinigend ausgebildet.

Die Hackschnitzel werden mittels eines Motors 8 und eines Schneckenantriebs oder dergleichen von der Speichervorrichtung 4 in den Reaktor 1 transportiert bzw. zugeführt.

Am Schneckenantrieb kann in nicht näher dargestellter Weise sowohl ein Wärmetauscher zur Abkühlung des erzeugten brennbaren Gasgemisches als auch ein Wärmetauscher zur Wärmerückgewinnung der in einem Abgasstrom des nicht aufgezeigten Gasmotors enthaltenden Wärme angeordnet werden.

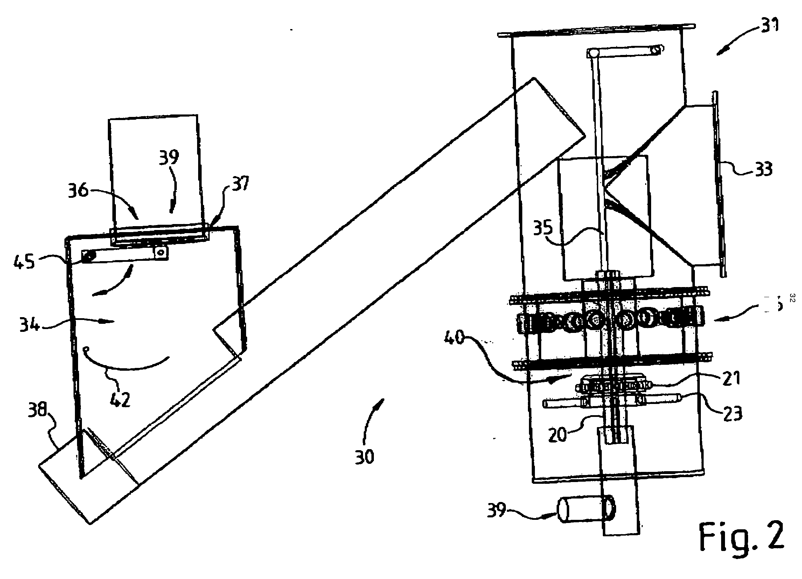

Das vom Reaktor 1 erzeugte brennbare Gasgemisch wird aus dem Reaktor 1 mittels eines Gasanschlusses 9 zu einem nicht näher dargestellten Gasmotor abgeleitet, wobei das Gasgemisch zuvor mit einer Gasreinigung/Gasfiltrierung, wie z.B. einem Zyklon, Tuchfilter oder dergleichen gereinigt und mittels einem Luftmischer mit Luft vermischt wird, und ein vom Gas abgetrennter Reststoff bzw. Asche einer Nachbehandlungseinheit 30 gemäß Figur 2 zugeführt wird. Das gereinigte brennbare Gasgemisch wird vor der Einheit 30 entsprechend abgezweigt und dem Gasmotor oder einer Brennstoffzelle zugeführt. Auf die Nachbehandlung mittels der Einheit 30 wird nachfolgend noch näher eingegangen.

Der Reaktor 1 umfasst insbesondere eine Oxidationszone 10 und eine Reduktionszone 11, Zur Ermittlung der Füllstandshöhe der Hackschnitzel weist der Reaktor 1 einen Füllstandsmelder 15 auf. Dieser kann als mechanischer Sensor 15 die Füllhöhe des Reaktors 1 detektieren und bei einer vorgegebenen Füllhöhe ein elektrisches Schaltelement betätigen, so dass mittels des Schneckenantriebs Hackschnitzel dem Reaktor 1 zugeführt werden. Hierbei ist sowohl ein phasenweises als auch nahezu kontinuierliches Zuführen von Hackschnitzel realisierbar.

Die Sauerstoffzuführung in den Reaktor bzw. zur Oxidationszone 10 erfolgt insbesondere mittels mehrer, z.B. ca. fünf Luftdüsen 16. Die Verwendung einzelner Luftdüsen 16 hat den Vorteil, dass die diese durchströmende Luft zu einer vorteilhaften Kühlung der Luftdüsen 16 zu verwenden ist, wodurch eine gegebenenfalls aufwendige Kühlung der Düsen 16 entfallen kann und/oder relativ gering wärmebeständige Werkstoffe für die Luftdüsen 16 vorgesehen werden können.

Zum Zünden bzw. Anbrennen der Hackschnitzel im Reaktor 1 und/oder für Wartungs- oder Reparaturzwecke ist ein weitgehend gasdicht verschließbarer Servicedeckel 13 vorgesehen.

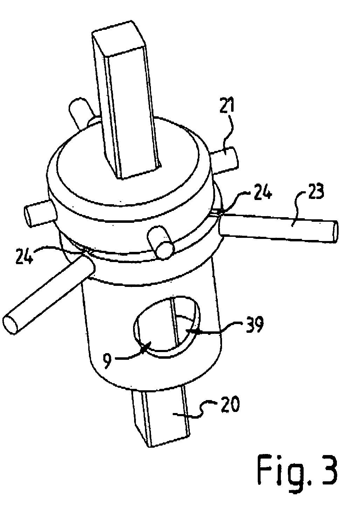

Mit Hilfe eines um eine Drehachse 20 zumindest teilweise drehbaren Rüttelrostes 19 kann das Glutbett bewegt werden. Hierbei sind separate Rostelemente vorgesehen, wobei ein oberes Rostelement 21 mittels der motorisch angetriebenen Drehachse 20 sich exzentrisch gemäß der Erfindung dreht. Ein unters Rostelement 23 ist feststehend ausgebildet. In Figur 3 ist der Rost vergrößert dargestellt. Hierbei wird auch die exzentrische Lagerung des drehenden Rostelementes 21 im Vergleich zum zentrisch gelagerten, feststehenden Rostelement 23 deutlich. Das erzeugte Gasgemisch strömt zwischen den beiden Rostelementen 21 und 23 hindurch, wofür vorteilhafte Noppen bzw. Nasen 24 vorgesehen sind, um einen lichten Durchlass für das Gas zu bilden. Das Gas strömt dann durch den Gasaustritt 9 ab.

Das Gas trägt hierbei Asche, Staub, Partikel oder dergleichen mit, die z.B. mittels einem Tuchfilter oder Ähnlichem vom Gas getrennt werden, d.h. das Gas wird gereinigt. Dieser anfallende Reststoff wird nun gemäß der Erfindung in der Nachbehandlungseinheit 30 oxidiert bzw. verbrannt (vgl. Figur 2). Hierfür ist ein Oxidationsreaktor 31 vorgesehen, der Luftdüsen zur Zuführung von Oxidationsmittel, vorzugsweise Luft, aufweist.

Zudem weist die Einheit 30 eine Vorratseinheit 34 bzw. einen Zwischenspeicher 34 auf. Die Einheit 30 bzw. die Vorratseinheit 34, d.h. deren Befüllungsöffnung 39 ist im Betrieb möglichst gasdicht verschlossenen, wofür diese eine um eine Drehachse 45 drehbare Klappe 36 umfasst. Das gasdichte Verschließen der Vorratseinheit 34 bzw. der Öffnung 39 kann alternativ auch mittels eines Schiebers, einer Schleuse oder dergleichen realisiert werden.

Zur Befüllung der Einheit 30 wird die weitgehend gasdicht verschließende Klappe 36 geöffnet. Die Befüllungsphase kann wenige Minuten oder Sekunden dauern, insbesondere bis die Vorratseinheit 34 teilweise gefüllt ist und die Klappe 36 wieder nahezu gasdicht zu verschließen ist.

Ein Füllstandssensor 42 ermittelt möglicherweise den Füllstand der Vorratseinheit 34, z.B. einen Drehflügelvollmelder, Ultraschallsensor oder dergleichen. Vorzugsweise ist die Klappe 36 hydraulisch, pneumatisch, mechanisch und/oder elektrisch zu betätigen, wobei eine weitgehend automatisiert ansteuerbare und betätigbare Klappe 6 von Vorteil ist.

Die Klappe 36 dichtet stirnseitig gegen eine Dichtfläche 37, die im Wesentlichen parallel zur Fall- bzw. Einfüllrichtung des Reststoffes ausgerichtet und als Hohlzylinder ausgebildet ist. Durch das Einfahren der Klappe 36 beim Schließvorgang werden gegebenenfalls vorhandene Verunreinigungen wie Staub oder dergleichen an der Dichtfläche beseitigt, so dass auch dauerhaft ein gasdichter Verschluss der Einheit 30 realisiert wird. Der Verschluss ist somit selbstreinigend ausgebildet.

Die Reststoffe werden mittels eines Motors 38 und eines Schneckenantriebs oder dergleichen von der Vorratseinheit 34 seitlich und aufsteigend in den Oxidationsreaktor 31 transportiert bzw. zugeführt.

Das vom Oxidationsreaktor 31 erzeugte Abgas weist zum Teil brennbare Bestandteile auf und kann deshalb dem Reaktor 1 und/oder dem nicht näher dargestellten Gasmotor zugeleitet werden. Auch kann das Abgas des Oxidationsreaktors 31 über ein Abgasrohr, Kamin etc. an die Atmosphäre abgegeben werden. Möglicherweise ist eine Abgasreinigung vorzusehen, um den gesetzlichen Bestimmungen Rechnung zu tragen.

Der Oxidationsreaktor 31 umfasst insbesondere im Bereich unterhalb der Lüftdüsen bzw. direkt oberhalb des Rostes eine Oxidationszone 40. Da der Reststoff unmittelbar auf dem Rost aufliegt und hier im Allgemeinen außen oxidiert bzw. verbrennt, bildet sich ein Glutring auf dem Rost. Ein in der Figur nicht näher dargestellter Räumer oder dergleichen bewegt den Reststoff bzw. die pulvrige Asche von oben durch den Füllschacht im Wesentlichen zentral herab kommend in vorteilhafter Weise nach außen, so das hier der Glutring gespeist wird. Verbranntes Material bzw. Reststoff fällt vorzugsweise umfangseitig nach unten und kann gesammelt und/ oder vorzugsweise automatisiert aus dem Oxidationsreaktor abgeführt werden.

Zur Ermittlung der Füllstandshöhe des Reststoffes weist der Oxidationsreaktor 31 einen Füllstandsmelder 35 auf. Dieser kann als mechanischer Sensor 35 die Füllhöhe des Oxidationsreaktors 31 detektieren und bei einer vorgegebenen Füllhöhe ein elektrisches Schaltelement betätigen, so dass mittels des Schneckenantriebs Reststoffe dem Oxidationsreaktor 31 zugeführt werden. Hierbei ist sowohl ein phasenweises als auch nahezu kontinuierliches Zuführen von Reststoffen realisierbar.

Die Sauerstoffzuführung in den Oxidationsreaktor 31 bzw. zur Oxidationszone 40 erfolgt insbesondere mittels mehrer, z.B. ca. fünf Luftdüsen 32. Zum Zünden bzw. Anbrennen der Reststoffe im Oxidationsreaktor 31 und/oder für Wartungs- oder Reparaturzwecke ist ein weitgehend gasdicht verschließbarer Servicedeckel 33 vorgesehen.

Mit Hilfe eines um eine Drehachse 20 zumindest teilweise drehbaren Rüttelrostes 19 kann das Glutbett bewegt werden. Hierbei sind separate Rostelemente vorgesehen, wobei ein oberes Rostelement 21 mittels der motorisch angetriebenen Drehachse 20 sich exzentrisch gemäß der Erfindung dreht. Ein unters Rostelement 23 ist feststehend ausgebildet. Wie bereits erwähnt, kann der Oxidationsreaktor als Rost einen über einem feststehenden Rostelement angeordneten, bewegbaren bzw. insbesondere drehbaren Räumer mit ggf. mehreren gebogenen bzw. spiralförmigen Flügeln oder dergleichen zum Bewegen des Reststoffes bzw. der Asche nach außen in radialer Richtung aufweisen, um einen vorteilhaften Glutring auszubilden.

In Figur 3 ist ein alternatives Ausführungsbeispiel eines Rostes vergrößert dargestellt, was auch heißt, dass die beiden Roste des Reaktors 1 und des Oxidationsreaktors 31 identisch ausgebildet werden können. Hierbei wird auch die exzentrische Lagerung des drehenden Rostelementes 21 im Vergleich zum zentrisch gelagerten, feststehenden Rostelement 23 deutlich. Das erzeugte Gasgemisch strömt beim Oxidationsreaktor 31 jedoch in vorteilhafter Weise außen bzw. umfangseitig ab und durch einen Gasaustritt 39 ab.

In einer zweiten vorteilhaften Ausführung einer Nachbehandlungseinheit 30 bzw. eines Kohlestaubofens 30 gemäß der Erfindung wird Reststoff 50 bzw. Kohlestaub 50 des Vergasers 1 mithilfe einer oder mehrerer Förder- bzw. Bewegungseinheiten 51, die z.B. zentral oder seitlich angeordnet sind, mittels rotierender Förderschnecken 53 oder beweglicher Schieber, Schaufeln oder Blechen weitgehend gleichmäßig über eine oder mehrere Oberflächen 52 bewegt. Die zur Oxidation verwendete Luft 54 strömt im Gleichstrom bzw. in Förder- bzw. Bewegungsrichtung 55 des Kohlestaubs 50 und tritt über einen Auslass bzw. die Öffnung 39 im unteren Teil der Nachbehandlung aus.

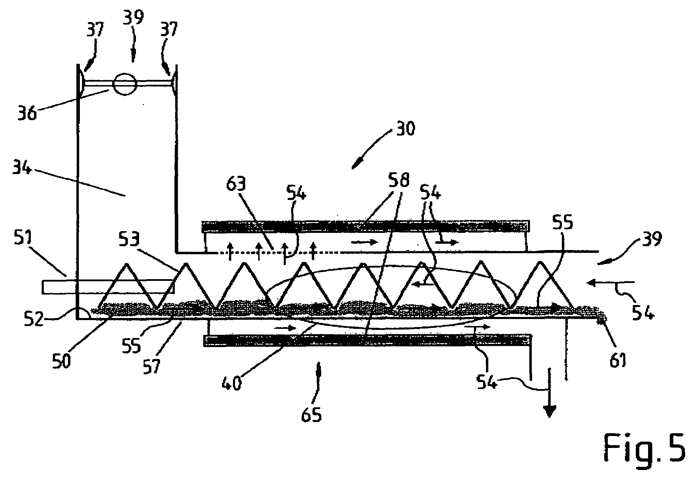

Darüber hinaus ist ein Gehäuse 57 vorgesehen, das gegebenenfalls eine Wärmetauschereinheit 58 (vgl. Figur 5) aufweist. Das Gehäuse 57 erstreckt sich (ohne nähere Darstellung) in vorteilhafter Weise senkrecht zur Blattebene in der Weise, dass die Oberflächen 52 als relativ große Ebenen realisiert sind. Dementsprechend ist eine große Reaktionsoberfläche des Reststoffes 50 mit der Luft 54 realisiert.

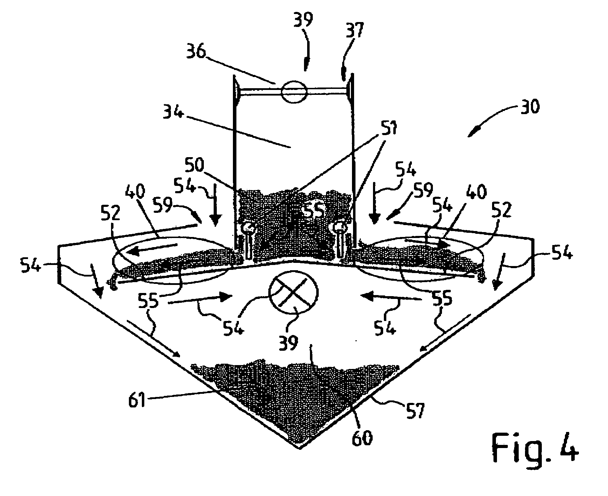

Bei der Variante gemäß Figur 4 weist dieses Gehäuse vergleichsweise große Einströmöffnungen 59 zum Einströmen von Luft 54 auf. Bei dieser Ausführungsform kann eine relativ große Oxidationsfläche auf vergleichsweiße geringem Raum geschaffen werden. Resultierend kann die Luft 54 zur Oxidation mit einer vergleichsweise geringen Geschwindigkeit bewegt werden, wodurch kein oder nur ein geringer Teil des Kohlestaubs 50 vom Luftstrom 54 erfasst und mitgetragen wird.

Die Bewegungseinheiten 51 können zusätzlich zum Verschließen der Vorratseinheit 34 gegenüber dem Oxidationsreaktor 40 bzw. der Oxidationszone 40 dienen. In Figur 4 wird zudem deutlich, dass die Oberflächen 52 in Bezug zur horizontalen Ebene schräg abfallend bzw. in vertikaler Richtung absteigend ausgebildet sind. Hierdurch lässt sich der Reststoff mithilfe der Bewegungseinheiten 51 im Bereich des Oxidationsreaktors 40 bzw. der Oxidationszone 40 leicht über die z.B. ca. 2° bis 25° geneigten Oberflächen 52 schieben und fällt in einen Sammelraum 60. Hierin wird der oxidierte Reststoff, d.h. der Abfallstoff 61 bzw. die weiße Asche 61 gesammelt. Ohne nähere Darstellung kann eine Austragsklappe oder dergleichen vorgesehen werden, mittels derer die weiße Asche von Zeit zu Zeit ausgetragen bzw. ausgeschleust und beseitigt bzw. deponiert wird.

Bei den Ausführungen gemäß der Erfindung ist eine nahezu gasdichte Schließeinheit 36 mittels einer Drehklappe 36 und/oder vorzugsweise von zwei übereinander geordneten Klappen (nicht dargestellt) und Dichtflächen 37 sowie eine Vorratseinheit 34 von entscheidendem Vorteil, um ein kontrolliertes und z.B. kontinuierliches oder diskontinuierliches Einbringen des Kohlestaubs 50 in die Nachbehandlungseinheit 30 zu gewährleisten. Andernfalls kann durch unkontrollierte Luftströmungen der in der Vorratseinheit 34 befindende Kohlestaub 50 oxidieren oder die Eintragsöffnung 39 verlassen.

Die bei der Oxidation von Kohlestaub 50 entstehende Wärme kann über die Luftströmung 54 abgeführt und über einen Wärmetauscher 58 vorzugsweise dem Kühlkreislauf der Kraftwärmekopplung zugeführt werden.

Des Weitern kann sich in der Vorratseinheit 34 der Nachbehandlungseinheit 30 eine oder mehrere Förderspiralen 53 befinden, die zusätzlich ggf. als Vorratseinheit 34 dienen und in vorteilhafter Weise eine gleichmäßige Verteilung über die gesamte Länge (senkrecht zur Blattebene) des Kohlestaubofens 30 gewährleisten. Im unteren Bereich bzw. im Sammelraum 60 kann (ohne nähere Darstellung) ebenfalls eine Förderspirale eingesetzt werden. Es hat sich gezeigt dass diese zum Austragen von weißer Asche von Vorteil ist.

Generell sollte der Kohlestaubofen 30 möglichst aus vergleichsweise hitzebeständigem Material gefertigt werden. Die Startenergie zum Zünden der Oxidation der Oxidationszone 40 wird vorzugsweise am Eingang 59, 39 der Luftströmung 54 z.B. mithilfe einer Lötlampe oder dergleichen zugeführt. Dieser Vorgang kann mehrere Sekunden oder Minuten in Anspruch nehmen und wird anschließend während der gesamten Betriebsdauer nicht mehr benötigt.

Der Abfallstoff 61 des Kohlestaubofens 30 bzw. die weiße Asche 61 kann in eine nicht näher dargestellte Speichereinheit gelangen, worin dieser gespeichert wird. Diese Speichereinheit kann automatisch oder in regelmäßigen Zeitintervallen manuell geleert werden.

In Figur 5 ist eine dritte Variante einer Nachbehandlungseinheit 30 gemäß der Erfindung schematisch dargestellt. Hierbei sind vergleichbare Komponenten mit den entsprechenden Bezugszeichen der vorgenannten Ausführungen der Erfindung versehen. Bei dieser besonderen Ausführung des Kohlestaubofens 30 wird der Kohlestaub 50 mithilfe einer Förderspirale 53 durch einen Fördertunnel 65 bzw. Förderkanal 65 bewegt. Die zur Oxidation benötigte Luft 54 wird in Gegenrichtung zur Förderbewegung 55 des Reststoffes 50 bzw. der Förderspirale 53 bewegt und tritt über ein Siebelement 63, z.B. ein Gitter, Sieb, Netz oder ähnliches aus der Nachbehandlungseinheit 30 aus, wobei das Siebelement 63 am Fördertunnel 65 angeordnet und/oder sich wenigsten teilweise um diesen herum erstreckt.

Durch dieses vorteilhafte Sieb- bzw. Filterelement 63 kann eine relativ hohe Luftgeschwindigkeit im Fördertunnel 65 realisiert werden, ohne dass (eine nennenswerte Menge an) Kohlestaub den Kohlestaubofen 30 verlässt. Die Luftgeschwindigkeit trägt in vorteilhafter Weise zur optimalen Funktion des Kohlestaubofens 30 bei, indem sie z.B. durch gewissen Funkenflug von bereits glühendem Kohlestaub 50 möglichst eine schnelle und gleichmäßige Ausbreitung der Oxidationszone 40 gewährleistet. Des Weiteren kann durch eine relativ hohe Strömungsgeschwindigkeit mehr Sauerstoff in die Oxidationszone 40 gelangen.

Durch das Anordnen bzw. Anbringen des Filterelements 63 an einer Außenwand 57 des Fördertunnels 65 wird dieses durch die Förderschnecke 53 abgereinigt bzw. abgestreift. Es hat sich gezeigt, dass ein Zusetzen oder Verstopfen des Filterelements 63 hierdurch wirkungsvoll verhindert wird.

Auch bei dieser Ausführung ist eine nahezu gasdichte Schließeinheit 36 sowie eine Vorratseinheit 34 von entscheidendem Vorteil, um möglichst ein kontrolliertes und dis-/kontinuierliches Einbringen des Kohlestaubs 50 zu gewährleisten. Andernfalls kann es zum Aufwirbeln des Kohlestaubs 50 oder Glut aus der Oxidationszone 40 kommen, was dann durch nachteilige Luft-Strömungen 54 in der Lage ist, den Kohlestaubofen 30 durch die Eintragsöffnung 39 zu verlassen.

Die bei der Oxidation von Kohlestaub 50 entstehende Wärme kann über einen Kühlmantel 58, der z.B. durch ein doppelwandiges Rohr ausgeführt sein kann, einem Fluid vorzugsweise dem Kühlkreislauf der Kraftwärmekopplung zugeführt werden.

Der Abfallstoff 61 des Kohlestaubofens 30 bzw. die weiße Asche 61 kann am Ende des Fördertunnels 65 austreten und z.B. in eine Speichereinheit gelangen, worin dieser gespeichert wird.

Die Förderschnecke 53 bzw. die Fördervorrichtung 51 wird durch einen nicht näher dargestellten Elektromotor angetrieben. In ersten Versuchen hat es sich gezeigt, dass es hierbei von Vorteil ist, dass die Vorratseinheit 34 mechanisch angetrieben entleert wird, d.h. dass der Reststoff 50 der Oxidationszone 40 mittels mechanischem Antrieb bzw. Beförderung zugeführt wird. Hiermit wird wirkungsvoll ein Verklumpen, Verkrusten bzw. eine Brückenbildung des z.T. sehr feinen Reststoffes 50 bzw. Kohlestaubes 50 verhindert.

In einer nicht näher dargestellten und bevorzugten Variante der Erfindung können die beiden Varianten gemäß Figur 4 und 5 in vorteilhafter Weise miteinander kombiniert werden. Das heißt, dass die Vorratseinheit 34 mechanisch angetrieben entleert wird, z.B. mittels Förderschnecke 53, wobei die Fördervorrichtung 51 bzw. Förderschnecke 53 sich jedoch nur bis vor oder nur zum Anfang der Oxidationszone 40 erstreckt. D.h. gegenüber der Variante in Figur 5 "abgeschnitten" bzw. verkürzt ausgeführt ist. Hierdurch wird in vorteilhafter Weise die (kontrollierte) Entleerung der Vorratseinheit 34 sichergestellt und zugleich die Fördervorrichtung 51 bzw. Förderschnecke 53 vor starker thermischer Belastung in der sehr heißen Oxidationszone 40 bzw. im Oxidationsreaktor 40 geschützt. Zudem werden Kosten für entsprechend lange Fördervorrichtungen 51 bzw. Förderschnecken 53 vermieden.

Die Beförderung in der Oxidationszone 40 bzw. im Oxidationsreaktor 40 erfolgt entsprechend der Variante gemäß Figur 4, d.h. mittels Schwerkraft bzw. durch eine schräge bzw. geneigte Anordnung der Oxidationszone 40 bzw. des Oxidationsreaktors 40 und somit der Oberfläche 52. Dementsprechend wird Reststoff 50 bzw. Kohlestaub 50 in die Oxidationszone 40 bzw. in den Oxidationsreaktor 40 mechanisch angetrieben hineingeschoben und dann durch den Fördertunnel 65 hindurchgeschoben bzw. das zu oxidierende Material rutscht durch den Tunnel 65 entsprechend selbsttätig hindurch und aus diesem hinten bzw. aus der Öffnung 39 hinaus.

Beispielsweise können im Bereich der Oxidationszone 40 bzw. in den Oxidationsreaktor 40 am Boden bzw. an der Oberfläche 52 Leitelemente wie Rampen oder dergleichen angeordnet werden, dass das über diese hinüber rutschende bzw. beförderte Material bzw. Kohlestaub 50 bewegt bzw. durchwühlt wird. Hiermit wird die Oxidation positiv beeinflusst. Alternativ oder in Kombination hierzu können auch Leitelemente wie Bleche und/oder Stäbe etc. an der Seite oder am oberen Deckenbereich des Fördertunnels 65 bzw. der Oxidationszone 40 bzw. des Oxidationsreaktors 40 vorgesehen werden, die in vorteilhafter Weise in den Reststoff 50 hineinragen bzw. ggf. bis zur Oberfläche 52 sich erstrecken und somit ebenfalls ein Bewegen bzw. Durchwühlen des Reststoffes 50 bzw. Kohlestaubes 50 im Bereich der Oxidationszone 40 bzw. im Oxidationsreaktor 40 generieren können.

Grundsätzlich kann das entstehende Abgas und/oder die ausströmende Luft 54 gesammelt bzw. zusammengeführt werden und mittels einem nicht näher dargestellten Kamin oder dergleichen in die Atmosphäre abgelassen werden. Im Allgemeinen ist dieses Abgas nicht brennbar. Durch die Nutzung der Wärme des Abgases kann der Wärmenutzungs- bzw. Gesamtwirkungsgrad verbessert werden.

## Patentansprüche

1. Vorrichtung zur Erzeugung eines brennbaren Gasgemisches aus einem kohlenstoffhaltigen Ausgangsstoff, insbesondere aus stückigem Holz, mit einer Zufuhreinheit (2) zur Zufuhr des Ausgangsstoffs zu einem Reaktor (1), wobei der Reaktor (1) wenigstens eine Oxidationszone (10) zur Oxidation des Ausgangsstoffes und eine Reduktionszone (12) zur Reduktion wenigstens eines Zwischenprodukts der Oxidation umfasst, wobei die Zufuhreinheit (2) wenigstens eine Speichervorrichtung (4) zur Zwischenspeicherung des Ausgangsstoffes umfasst, wobei der Reaktor (1) wenigstens eine Ausgabeeinheit (9) zum Ausgeben eines kohlenstoffhaltigen Reststoffs (50) umfasst **dadurch gekennzeichnet, dass** wenigstens eine Nachbehandlungseinheit (30) zum Nachbehandeln des Reststoffes (50) vorgesehen ist, und dass die Nachbehandlungseinheit (30) wenigstens einen zumindest eine Oxidationszone (40) aufweisenden Oxidationsreaktor (31) zur Oxidation des Reststoffes (50) umfasst und dass zwischen einer mit mindestens einer Schließeinheit (36) im Wesentlichen gasdicht verschließbaren Eintragsöffnung (39) der Nachbehandlungseinheit (30) und dem Oxidationsreaktor (31, 40) wenigstens eine Vorratseinheit (34) zum Bevorraten des Reststoffes (50) angeordnet ist.

2. Vorrichtung nach Anspruch 1, **dadurch gekennzeichnet, dass** die Vorratseinheit (34) in horizontaler Richtung seitlich am Oxidationsreaktor (31) angeordnet ist.

3. Vorrichtung nach einem der vorgenannten Ansprüche, **dadurch gekennzeichnet, dass** die Nachbehandlungseinheit (30) wenigstens eine Fördervorrichtung (51, 53) zur Beförderung des Reststoffes (50) von der Vorratseinheit (34) wenigstens bis zum Oxidationsreaktor (31, 40) umfasst.

4. Vorrichtung nach einem der vorgenannten Ansprüche, **dadurch gekennzeichnet, dass** die Fördervorrichtung (51, 53) wenigstens einen Antriebsmotor zum Antreiben mindestens eines Förderelementes (53) aufweist.

5. Vorrichtung nach einem der vorgenannten Ansprüche, **dadurch gekennzeichnet, dass** eine Förderrichtung (55) des Reststoffes (50) zwischen der Vorratseinheit (34) und dem Oxidationsreaktor (31) als wenigstens teilweise in vertikaler Richtung absteigende Förderrichtung (55) des Reststoffes (50) ausgebildet ist.

6. Vorrichtung nach einem der vorgenannten Ansprüche, **dadurch gekennzeichnet, dass** eine Förderrichtung (55) des Reststoffes (50) zwischen dem Oxidationsreaktor (31) und einer Austragöffnung (39) zum Austragen eines Abfallstoffes (61) der Nachbehandlungseinheit (30) als wenigstens teilweise in vertikaler Richtung absteigende Förderrichtung (55) des Reststoffes (50) ausgebildet ist.

7. Vorrichtung nach einem der vorgenannten Ansprüche, **dadurch gekennzeichnet, dass** ein Gehäuse (57) der Nachbehandlungseinheit (30) wenigstens ein zahlreiche Öffnungen aufweisendes Siebelement (63) zum Durchströmen von Luft (54) und/ oder Oxidationsmittel umfasst.

8. Vorrichtung nach einem der vorgenannten Ansprüche, **dadurch gekennzeichnet, dass** das Siebelement (63) zwischen dem Oxidationsreaktor (31) sowie der Vorratseinheit (34) angeordnet ist.

9. Vorrichtung nach einem der vorgenannten Ansprüche, **dadurch gekennzeichnet, dass** die Fördervorrichtung (51, 53) als Abstreifer und/oder als Reinigungseinheit zum Abstreifen bzw. Reinigen des Siebelementes (63) ausgebildet ist.

10. Vorrichtung nach einem der vorgenannten Ansprüche, **dadurch gekennzeichnet, dass** die Zufuhreinheit (2) des Reaktors (1) und/oder die Vorratseinheit (34) wenigstens eine mindestens zwei in Bewegungsrichtung des Ausgangsstoffs oder des Reststoffs (50) hintereinander angeordnete Verschlusselemente (6, 36) aufweisende Eingangsschleuse aufweist.

11. Vorrichtung nach einem der vorgenannten Ansprüche, **dadurch gekennzeichnet, dass** die Zufuhreinheit (2) des Reaktors (11) und/oder die Vorratseinheit (34) und/oder die Eingangsschleuse wenigstens eine Schließdichtung mit einer im Wesentlichen in Bewegungsrichtung des Ausgangsstoffs oder des Reststoffs (50) ausgerichteten Dichtungsfläche (7, 37) aufweist.

12. Anlage zur Erzeugung von Wärmeenergie und/oder elektrischer Energie mit einer Vorrichtung zur Erzeugung eines brennbaren Gasgemisches aus mindestens einem kohlenstoffhaltigen Ausgangsstoff, einer Verbrennungsmaschine zum Verbrennen des Gasgemisches und/oder einem Generator zur Erzeugung elektrischer Energie, **dadurch gekennzeichnet, dass** die Vorrichtung nach einem der vorgenannten Ansprüche ausgebildet ist.

## Claims

1. Device for producing a combustible gas mixture from a carbon-containing starting material, in particular from wood chippings, with a feeding unit (2) for feeding the starting material to a reactor (1), wherein the reactor (1) comprises at least one oxidation zone (10) for oxidation of the starting material and a reduction zone (12) for reduction of at least an intermediate product of the oxidation, wherein the feeding unit (2) comprises at least one storage device (4) for temporary storage of the starting material, wherein the reactor (1) comprises at least one discharge unit (9) for discharging a carbon-containing residual material (50), **characterised in that** at least one posttreatment unit (30) is provided for post treatment of the residual material (50), and **in that** the post treatment unit (30) comprises at least one oxidation reactor (31) exhibiting at least one oxidation zone (40) for oxidation of the residual material (50) and **in that** at least one supply unit (34) for supplying the residual material (50) is arranged between an inlet opening (39) of the post treatment unit (30) which can be sealed essentially gastight with at least one closing unit (36) and the oxidation reactor (31, 40).

2. Device according to claim 1, **characterised in that** the supply unit (34) is arranged beside the oxidation reactor (31) in a horizontal direction.

3. Device according to one of the preceding claims, **characterised in that** the post treatment unit (30) comprises at least one conveying device (51 ,53) for conveying the residual material (50) from the supply unit (34) at least to the oxidation reactor (31, 40).

4. Device according to one of the preceding claims, **characterised in that** the conveying device (51 ,53) exhibits at least one driving motor for driving at least one conveying element (53).

5. Device according to one of the preceding claims, **characterised in that** a conveying device (55) for the residual material (50) between the supply unit (34) and the oxidation reactor (31) is embodied in the form of a conveying device (55) for the residual material (50) which descends at least partly in a vertical direction.

6. Device according to one of the preceding claims, **characterised in that** a conveying device (55) for the residual material (50) between the oxidation reactor (31) and a discharge opening (39) for discharging a waste material (61) from the post treatment unit (30) is embodied in the form of a conveying device (55) for the residual material (50) which descends at least partly in a vertical direction.

7. Device according to one of the preceding claims, **characterised in that** a housing (57) of the post treatment unit (30) comprises at least one screening element (63) exhibiting numerous openings for passage of air (54) and/or oxidation medium.

8. Device according to one of the preceding claims, **characterised in that** the screening element (63) is arranged between the oxidation reactor (31) and the supply unit (34).

9. Device according to one of the preceding claims, **characterised in that** the conveying device (51, 53) is embodied in the form of a scraper and/or a cleaning unit for respectively scraping and cleaning the screening element (63).

10. Device according to one of the preceding claims, **characterised in that** the feeding unit (2) of the reactor (1) and/or the supply unit (34) exhibits at least one inlet lock exhibiting at least two closing elements (6, 36) arranged one behind another in the direction of movement of the starting material or the residual material (50).

11. Device according to one of the preceding claims, **characterised in that** the feeding unit (2) of the reactor (1) and/or the supply unit (34) and/or the inlet lock exhibits at least one closing seal with a sealing face (7, 37) essentially oriented in the direction of movement of the starting material or the residual material (50).

12. Installation for producing thermal energy and/or electrical energy with a device for producing a combustible gas mixture from at least one carbon-containing starting material, a combustion machine for burning the gas mixture and/or a generator for generating electrical energy, **characterised in that** the device is embodied according to one of the preceding claims.

## Revendications

1. Dispositif pour produire un mélange de gaz combustible à partir d'un produit de départ carboné, en particulier de bois en morceaux, avec une unité d'amenée (2) pour amener le produit de départ jusqu'à un réacteur (1), le réacteur (1) comprenant au moins une zone d'oxydation (10) pour l'oxydation du produit de départ, et une zone de réduction (12) pour la réduction d'au moins un produit intermédiaire de l'oxydation, l'unité d'amenée (2) comprenant au moins un dispositif de stockage (4) pour stocker temporairement le produit de départ, le réacteur (1) comprenant au moins une unité de sortie (9) pour la sortie d'un produit résiduaire carboné (50),
**caractérisé en ce qu'**il est prévu au moins une unité de retraitement (30) pour le retraitement du produit résiduaire (50), et **en ce que** l'unité de retraitement (30) comprend au moins un réacteur d'oxydation (31), présentant au moins une zone d'oxydation (40), pour l'oxydation du produit résiduaire (50), et **en ce qu'**il est prévu, entre une ouverture d'entrée (39) de l'unité de retraitement (30), apte à être fermée de manière globalement étanche au gaz à l'aide d'une unité de fermeture, et le réacteur d'oxydation (31, 40), au moins une unité de réserve (34) pour le stockage du produit résiduaire (50).

2. Dispositif selon la revendication 1, **caractérisé en ce que** l'unité de réserve (34) est disposée dans le sens horizontal sur le côté du réacteur d'oxydation (31).

3. Dispositif selon l'une des revendications précédentes, **caractérisé en ce que** l'unité de retraitement (30) comprend au moins un dispositif de transport (51, 53) pour transporter le produit résiduaire (50) de l'unité de réserve (34) au moins jusqu'au réacteur d'oxydation (31, 40).

4. Dispositif selon l'une des revendications précédentes, **caractérisé en ce que** le dispositif de transport (51, 53) comporte au moins un moteur d'entraînement pour entraîner au moins un élément de transport (53).

5. Dispositif selon l'une des revendications précédentes, **caractérisé en ce qu'**un sens de transport (55) du produit résiduaire (50) entre l'unité de réserve (34) et le réacteur d'oxydation (31) est conçu comme un sens de transport (55) du produit résiduaire (50) qui descend au moins en partie dans le sens vertical.

6. Dispositif selon l'une des revendications précédentes, **caractérisé en ce qu'**un sens de transport (55) du produit résiduaire (50) entre le réacteur d'oxydation (31) et une ouverture de sortie (39) pour la sortie d'un déchet (61) de l'unité de retraitement (30) est conçu comme un sens de transport (55) du produit résiduaire (50) qui descend au moins en partie dans le sens vertical.

7. Dispositif selon l'une des revendications précédentes, **caractérisé en ce qu'**un carter (57) de l'unité de retraitement (30) comprend au moins un élément formant tamis (63), pourvu de nombreuses ouvertures, pour le passage d'air (54) et/ou d'agent oxydant.

8. Dispositif selon l'une des revendications précédentes, **caractérisé en ce que** l'élément formant tamis (63) est disposé entre le réacteur d'oxydation (31) et l'unité de réserve (34).

9. Dispositif selon l'une des revendications précédentes, **caractérisé en ce que** le dispositif de transport (51, 53) est conçu comme un racloir et/ou comme une unité de nettoyage pour racler ou nettoyer l'élément formant tamis (63).

10. Dispositif selon l'une des revendications précédentes, **caractérisé en ce que** l'unité d'amenée (2) du réacteur (1) et/ou l'unité de réserve (34) comportent au moins un sas d'entrée qui comporte au moins deux éléments de fermeture (6, 36) disposés l'un derrière l'autre dans le sens de déplacement du produit de départ ou du produit résiduaire (50).

11. Dispositif selon l'une des revendications précédentes, **caractérisé en ce que** l'unité d'amenée (2) du réacteur (1) et/ou l'unité de réserve (34) et/ou le sas d'entrée présentent au moins une étanchéité de fermeture avec une surface d'étanchéité (7, 37) dirigée globalement dans le sens de déplacement du produit de départ ou du produit résiduaire (50).

12. Installation pour produire de l'énergie thermique et/ou de l'énergie électrique avec un dispositif pour produire un mélange de gaz combustible à partir d'au moins un produit de départ carboné, un moteur à combustion pour brûler le mélange gazeux, et/ou un générateur pour produire de l'énergie électrique, **caractérisée en ce que** le dispositif est conçu selon l'une des revendications précédentes.
